# EUROPEAN PATENT APPLICATION

(11) **EP 4 811 080 A1**
(43) Date of publication of application: **23.09.2026**
(21) Application number: 24934477.1
(22) Date of filing: 10.04.2024
(51) Int. Cl.: G06F 3/01

(54) **CONTROL METHOD, MOTION SENSING CONTROL DEVICE, DISPLAY DEVICE, SYSTEM, AND RELATED APPARATUS**

(71) Applicant: SZ DJI Technology Co., Ltd., Shenzhen, Guangdong 518000 (CN)
(72) Inventor: HUANG, Min, Shenzhen, Guangdong 518000 (CN); LI, Yingyu, Shenzhen, Guangdong 518000 (CN); CHEN, Feng, Shenzhen, Guangdong 518000 (CN)
(74) Representative: Appelt, Christian W.
(86) International application number: PCT/CN2024/087065
(87) International publication number: WO 2025/213395

(57) **Abstract**

The present disclosure provides a control method, a motion-sensing control device, a display device, a movable object, a system, and a computer-readable storage medium. The motion-sensing control device is able to generate attitude information in response to its own attitude changes. The control method includes: obtaining a current state of a movable object; automatically switching between a control mode for a display device and a control mode for the movable object based on the current state of the movable object; generating first attitude information in the control mode for the display device, and using the first attitude information to control the display interface of the display device; and generating second attitude information in the control mode for the movable object, and using the second attitude information to control the movable object. The movable object is an object capable of moving in real space. The difficulty for users to control the display interface of the display device while using the motion-sensing control device to control the movable object is reduced.

## Description

### TECHNICAL FIELD

The present disclosure generally relates to the field of motion-sensing control and, more particularly, to a control method, a motion-sensing control device, a movable object, a display device, a system, and a computer-readable storage medium.

### BACKGROUND

In related technologies, motion-sensing control devices may be used to control movable objects, and information related to the movable objects may be displayed on a display device. When users need to interact with the display interface of the display device, they often need to directly operate the display device with their hands. However, when users control the movable objects with a handheld motion-sensing control device while manually operating the display device, there is a significant risk of misoperation, which may lead to unintended control of the movable objects and pose risks to the movement and other operations of the movable objects.

### SUMMARY

In view of the above technical problems, the present disclosure provides a control method, a motion-sensing control device, a display device, a movable object, a system, and a computer-readable storage medium, with the following technical solutions.

The first aspect of the present disclosure provides a control method applied to a motion-sensing control device. The motion-sensing control device is able to generate attitude information in response to its own attitude changes. The control method includes: obtaining a current state of a movable object; automatically switching between a control mode for a display device and a control mode for the movable object based on the current state of the movable object; generating first attitude information in the control mode for the display device, and using the first attitude information to control the display interface of the display device; and generating second attitude information in the control mode for the movable object, and using the second attitude information to control the movable object. The movable object is an object capable of moving in real space. The difficulty for users to control the display interface of the display device while using the motion-sensing control device to control the movable object is reduced.

A second aspect of the present disclosure provides control method applied to a display device, including: receiving first attitude information sent by a motion-sensing control device, and configuring a display interface of the display device based on the first attitude information, where the motion-sensing control device is capable of generating attitude information in response to changes in its own attitude; and receiving second attitude information sent by the motion-sensing control device, and forwarding the second attitude information to a movable object, such that the motion-sensing control device controls the movable object using the second attitude information, where the movable object is an object capable of moving in real space.

A third aspect of the present provides control method applied to a display device, including: receiving attitude information and control object information associated with the attitude information sent by a motion-sensing control device, where the motion-sensing control device is capable of generating attitude information in response to changes in its own attitude; when a control object represented by the control object information is the display device, executing a response measure corresponding to the attitude information; and when the control object represented by the control object information is an object other than the display device, not executing the response measure corresponding to the attitude information.

A fourth aspect of the present provides a control method applied to a display device, including: receiving attitude information and control object information associated with the attitude information sent by a motion-sensing control device, where the motion-sensing control device is capable of generating attitude information in response to changes in its own attitude; when a control object represented by the control object information is the display device, executing a response measure corresponding to the attitude information; and when the control object represented by the control object information is a target object other than the display device, forwarding the attitude information and the control object information to the target object, to make the target object execute a response measure corresponding to the attitude information.

A fifth aspect of the present provides a control method applied to a movable object, wherein: receiving attitude information and control object information associated with the attitude information from a motion-sensing control device, where the motion-sensing control device is able to generate the attitude information in response to changes in its own attitude; when a control object represented by the control object information is the movable object, executing a response measure corresponding to the attitude information; and when the control object represented by the control object information is an object other than the movable object, not executing a response measure corresponding to the attitude information.

A sixth aspect of the present disclosure provides a control method, applicable to scenarios where a motion-sensing control device capable of generating attitude information in response to changes in its own attitude controls a display device and a movable object respectively, including: in response to a current state of the movable object being a first state, determining a control object to which the attitude information generated by the motion-sensing control device targets to be the movable object; and in response to the current state of the movable object being a second state, determining a control object to which the attitude information generated by the motion-sensing control device targets to be a display interface.

A seventh aspect of the present disclosure provides a motion-sensing control device, including: a processor; and a memory for storing processor-executable instructions. The processor is configured to implement the control method in the first aspect of the present disclosure.

An eighth aspect of the present disclosure provides a display device, including: a processor; and a memory for storing processor-executable instructions. The processor is configured to implement the control method in any of the second aspect to the fourth aspect of the present disclosure.

A ninth aspect of the present disclosure provides a movable object, including: a processor; and a memory for storing processor-executable instructions. The processor is configured to implement the control method in the fifth aspect or the sixth aspect of the present disclosure.

A tenth aspect of the present disclosure provides a control system, including the motion-sensing control device in the seventh aspect, the display device in the eighth aspect, and the movable object in the ninth aspect. The motion-sensing control device is capable of generating attitude information in response to changes in its own attitude, the movable object is an object capable of moving in the real space, and information associated with the movable object is configured to be displayed on the display interface of the display device.

An eleventh aspect of the present provides a computer-readable storage medium, configured to store a computer program. When the computer program is executed by a processor, the processor is configured to implement any method provided in the first aspect to the sixth aspect of the present disclosure.

In the present disclosure, for a motion-sensing control device that is able to generate attitude information in response to changes in its own attitude, two control modes may be provided: one for the display device and one for the movable object. The present disclosure also provides the capability of automatically switching between these two control modes based on the current state of the movable object. This automatic switching may allow users to conveniently control both the display device and the movable object using the attitude information generated by the motion-sensing control device, ensuring that the users are able to control the movable object while simultaneously manipulating the display interface without worrying about accidental misoperation leading to undesirable control of the movable object, thus promoting safe control of the movable object.

It should be understood that the above general description and the following specifications are merely exemplary and explanatory, and do not limit the scope of the present disclosure.

### BRIEF DESCRIPTION OF THE DRAWINGS

To more clearly illustrate the technical solutions of the embodiments of the present disclosure or in related technologies, the drawings used in the description of the embodiments will be briefly introduced below. Obviously, the drawings described below are some embodiments of the present disclosure. For those skilled in the art, other drawings may be obtained based on these drawings without creative effort.
FIG. 1 is a schematic diagram of a scenario of a motion-sensing control device, a movable object, and a display device in related technologies.
FIG. 2A is a schematic diagram of a control scenario of a motion-sensing control device in existing technologies.
FIG. 2B and 2C are schematic diagrams of a control scenario of a display device in existing technologies.
FIG. 3 is a schematic flowchart of a control method consistent with embodiments of the present disclosure.
FIG. 4 is a schematic diagram of a control method consistent with embodiments of the present disclosure.
FIG. 5 is a schematic diagram of a position point consistent with embodiments of the present disclosure.
FIG. 6A, 6B, and 6C are schematic diagrams of control scenarios of a position point consistent with embodiments of the present disclosure.
FIG. 7A and 7B are schematic diagrams of control scenarios of a motion-sensing control device consistent with embodiments of the present disclosure.
FIG. 8 is another schematic flowchart of a control method consistent with embodiments of the present disclosure.
FIG. 9 is another schematic flowchart of a control method consistent with embodiments of the present disclosure.
FIG. 10 is another schematic flowchart of a control method consistent with embodiments of the present disclosure.
FIG. 11 is another schematic flowchart of a control method consistent with embodiments of the present disclosure.
FIG. 12 is a schematic diagram of an application scenario of a control method consistent with embodiments of the present disclosure.
FIG. 13 is a schematic diagram of another application scenario of a control method consistent with embodiments of the present disclosure.
FIG. 14 is a schematic structural diagram of a motion-sensing control device consistent with embodiments of the present disclosure.
FIG. 15 is a schematic structural diagram of a display device consistent with embodiments of the present disclosure.
FIG. 16 is a schematic structural diagram of a movable object consistent with embodiments of the present disclosure.
FIG. 17 is a schematic structural diagram of a control system consistent with embodiments of the present disclosure.

### DETAILED DESCRIPTION OF THE EMBODIMENTS

The technical solutions in the embodiments of the present disclosure will be clearly and completely described below with reference to the accompanying drawings. Obviously, the described embodiments are only a part of embodiments of the present disclosure, but not all embodiments of the present disclosure. Based on the embodiments in the present disclosure, all other embodiments obtained by those skilled in the art without creative effort are within the scope of protection of the present disclosure.

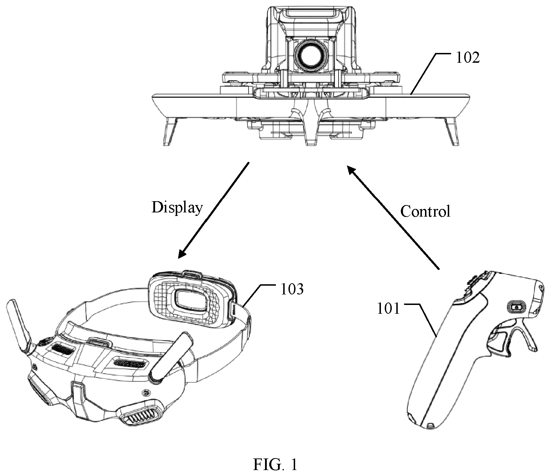

As shown in FIG. 1, the following is an exemplary description of a control scenario involving a motion-sensing control device, a movable object, and a display device in the related technology. In the related technology, the motion-sensing control device 101 may be used to control a movable object 102, and information related to the movable object 102 may be displayed on the display device 103. When a user needs to interact with the display interface of the display device 103, the user often needs to directly operate the display device 103 with their hand. However, the difficulty of manually operating the display device 103 while simultaneously controlling the movable object 102 with the motion-sensing control device 101 is relatively high.

As an example, the movable object 102 may be an unmanned aerial vehicle, and the display device 103 may be flight glasses. The unmanned aerial vehicle may send information related to the unmanned aerial vehicle, such as flight state parameters or images captured during flight, to the flight glasses, where the display interface shows this information. It is understood that the specific implementation of the movable object 102 and the display device 103 is not limited.

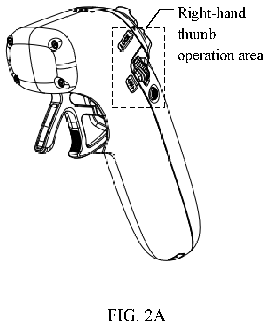

As shown in FIG. 2A, the following is an illustrative description of a control scenario for a motion-sensing device in the related technology. A motion-sensing device in the related technology is generally designed for right-handed operation. The left side of the device often has buttons. When a user holds the device with their right hand, the left side is typically the area controlled by the user's right thumb. If the user chooses to hold the device with their left hand, the buttons in the right thumb control area become inconvenient to trigger.

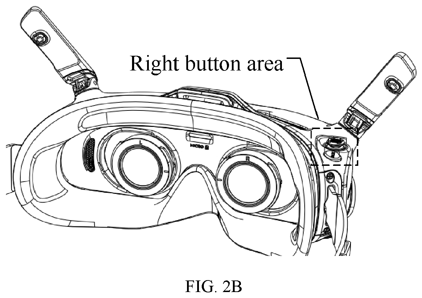

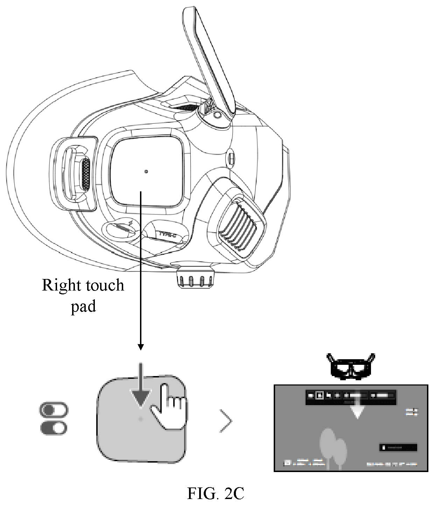

As shown in FIG. 2B and FIG. 2C, the following is an exemplary description of a control scenario for a display device in the related technology. Taking the flight glasses shown in FIG. 2B and FIG. 2C as an example, when a user wears the flight glasses, they needs to interact with the display interface inside the glasses to control it. Control of the display interface may be achieved through the button area on the flight glasses (e.g., the right-side joystick shown in FIG. 2B) or the touchpad shown in FIG. 2C. For example, as shown in FIG. 2C, the menu of the display interface is controlled through the touchpad of the flight glasses. Both the button area and the touchpad of the flight glasses are designed for the right hand. As shown in FIG. 2B and FIG. 2C, the button area and touchpad for controlling the display interface of the flight glasses are located on the right side of the glasses for easy right-handed use.

In an exemplary control scenario of the motion-sensing control device, movable object, and display device shown in FIG. 1, and in an operation scenario of the motion-sensing control device and display device shown in FIG. 2A to FIG. 2C, taking the display device being glasses and the motion-sensing control device being a handheld device as an example, when a user wears glasses, if the user needs to interact with the display interface of the glasses, they often needs to first switch the motion-sensing control device held in their right hand to their left hand, then raise their right hand to operate the button area or touchpad area on the right side of the glasses to control the display interface. After the user finishes interacting with the display interface, they then lowers their right hand to retrieve the motion-sensing control device to continue controlling the movable object. This operation is not very convenient, and the convenience is especially low when the user's left hand is holding other objects, making it difficult to temporarily hold the motion-sensing control device. Furthermore, when switching the motion-sensing control device from the right hand to the left hand, the user may accidentally press a button on the device, causing the movable object to move unexpectedly, thus posing a potential hazard to the movement of the movable object.

It is worth noting that the above description of control scenarios for motion-sensing control devices, movable objects, and display devices is merely illustrative. In practical applications, other control scenarios may exist, and no specific limitations are made.

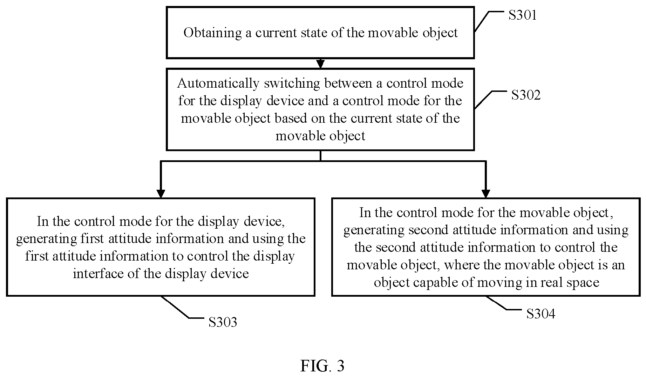

To address the aforementioned issues, the present disclosure provides a control method for a motion-sensing control device. This device may generate attitude information in response to changes in its own attitude. Users may conveniently control a display device and a movable object using the attitude information generated by the motion-sensing control device, thus reducing the difficulty for users to control both the movable object and a display interface of the display device simultaneously. As shown in FIG. 3, the method includes:
S301, obtaining a current state of the movable object;
S302, automatically switching a control mode for the display device and a control mode for the movable object based on the current state of the movable object;
S303, in the control mode for the display device, generating first attitude information and using the first attitude information to control the display interface of the display device; and
S304, in the control mode for the movable object, generating second attitude information and using the second attitude information to control the movable object, where the movable object is an object capable of moving in real space.

It should be noted that the order of S303 and S304 is not limited.

The technical solution provided in the present disclosure provides two control modes for the display device and the movable object, with respect to the motion-sensing control device that is able to generate the attitude information in response to its own attitude changes. It also provides the ability to automatically switch the two control modes based on the current state of the movable object. By automatically switching the two control modes based on the current state of the movable object, users may conveniently control the display device and the movable object using the attitude information generated by the motion-sensing control device, which reduces the difficulty for users to control the display interface of the display device while using the motion-sensing control device to control the movable object.

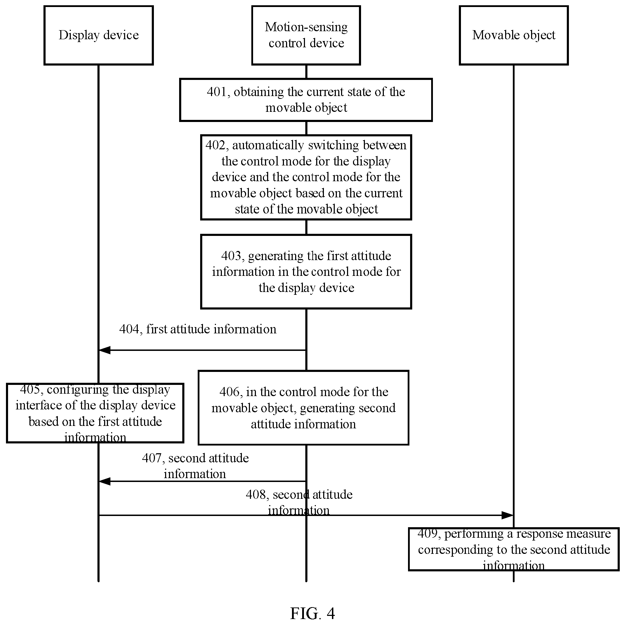

In the present disclosure, the motion-sensing control device may utilize the generated attitude information to control the display device and the movable object in various ways. Several embodiments are provided, and one embodiment will be used as an example and will be described below, as shown in FIG. 4. The motion-sensing control device may generate the attitude information in response to its own attitude changes. In one embodiment of the present disclosure, the control method may include following.

401, obtaining the current state of the movable object.

402, automatically switching between the control mode for the display device and the control mode for the movable object based on the current state of the movable object.

The control mode of the motion-sensing control device may be affected by various factors. For example, the control mode of the motion-sensing control device may be related to the current state of the movable object. In response to the current state of the movable object being a first state, the attitude information generated by the motion-sensing control device may target the movable object; and, in response to the current state of the movable object being a second state, the attitude information generated by the motion-sensing control device may target the display interface. Thus, the motion-sensing control device may switch the control object targeted by the attitude information generated by the motion-sensing control device based on the current state of the movable object, thereby achieving automatic switching between the control mode for the display device and the control mode for the movable object.

The current state of the movable object may be determined in various ways. For example, one way may include receiving state information sent by the movable object to determine its current state based on that information. It is worth noting that the above description of methods for determining the current state of a movable object is merely illustrative. In practical applications, other specific methods may also be possible. For instance, the motion-sensing control device, capable of controlling the state of the movable object, may acquire historical control instructions related to the movable object's state to determine its current state. Furthermore, the motion-sensing control device may have a dedicated button for switching the state of the movable object, allowing the determination of the movable object's current state based on preset control instructions stored locally. Therefore, the way for determining the current state of a movable object is not limited.

The state information transmitted by the movable object may be implemented in various ways. As an example, the state information transmitted by the movable object may include its communication state. As another example, the state information transmitted by the movable object may include its motion state. As yet another example, the state information transmitted by the movable object may include both its communication state and motion state. It is worth noting that the above descriptions of the specific implementations of the state information transmitted by the movable object are merely illustrative; and in practical applications, other specific implementations are possible and are not limited thereto.

The communication state of the movable object may also be implemented in various ways. As an example, if the movable object and the display device are communicatively connected to each other, the communication state of the movable object may include a communication connection state. As another example, the communication state of the movable object may include a communication disconnection state. For example, the first state may include the communication connection state between the movable object and the display device, and the second state may include either the communication connection state or the communication disconnection state between the movable object and the display device. When the movable object and the display device are in the communication connection state, the attitude information generated by the motion-sensing control device may control either the display device or the movable object. In this case, because the movable object and the display device are in the communication connection state, the display device may display information related to the movable object, and the user may understand information related to the movable object through the display device without worrying about controlling the movable object. However, when the movable object and the display device are in the communication disconnected state, the attitude information generated by the motion-sensing control device may not control the movable object but control the display device. In this case, the display device and the movable object are not communicating with each other, and the user cannot understand information related to the movable object through the display device. Therefore, the motion-sensing control device controlling only the display device without controlling the movable object may help reduce the user's concern about controlling the movable object. It is worth noting that the above description of the specific implementation of the communication state of the movable object is only an illustrative example. In practical applications, other specific implementations are possible, and no limitation is made.

The motion state of the movable object may be implemented in various ways. As an example, the movable object may include multiple motion states. The first state mentioned above may include the movable object being in a first motion state, and the second state may include the movable object being in a second motion state. As another example, the movable object may include an aircraft. The first motion state may include at least one of the following: the aircraft being propeller-engaged, the aircraft being taking off, the aircraft being in flight, the aircraft being returning, the aircraft being landing, or the aircraft has landed but has not stopped propellers. As another example, the second motion state may include the movable object being in a locked state, in which case the movable object stops moving. The motion-sensing control device may operate the movable object and the display device independently, enabling safe switching between the two. Switching to control the display device may only be possible when the movable object is locked. When the movable object is unlocked, only the movable object may be operated, ensuring the safety of the motion-sensing control device in operating the movable object. It is worth noting that the above description of the specific implementation of the motion state of a movable object is only an illustrative example. In practical applications, other specific implementations may exist, and no limitation is made in this regard.

As another example, when the movable object includes an aircraft, the locked state of the movable object may include the aircraft being in a hovering state. The locked state of the movable object may also include the aircraft being in a de-propulsion state. The specific implementation of the locked state is not limited.

The motion state of the movable object may change in various ways. For example, the motion state of the movable object may change based on at least one of the operator's control instructions or the motion environment of the movable object. For instance, the motion state of the movable object may change based on the operator's control instructions, or may change based on changes in both the operator's control instructions and the motion environment. For example, in response to the operator's braking instruction, the aircraft may enter a hovering state from flight. As another example, when an obstacle appears in the aircraft's flight environment, the aircraft may automatically perform an obstacle avoidance operation, such as braking at a certain distance from the obstacle. The specific ways in which the motion state of the movable object changes are not limited.

As an example, the control mode of the motion-sensing control device may also be related to user trigger instructions received by the motion-sensing control device. As another example, the aforementioned user trigger instructions may include an instruction for selecting a control mode for the motion-sensing control device, or, alternatively, an instruction for switching the state of the movable object. As another example, the user trigger instruction for selecting the control mode for the motion-sensing control device may include selecting the control mode for the display device, or alternatively, selecting the control mode for the movable object. As another example, the user-switched state instructions for the movable object may include switching the communication state of the movable object, or alternatively, switching the motion state of the movable object. It is worth noting that the above description of the influencing factors for switching the control mode of the motion-sensing control device is merely illustrative; and, in practical applications, other influencing factors may exist, and these are not limited to any particular factor.

As an example, the motion-sensing control device may also, in response to the selection of the control mode for the display device, switch the current state of the movable object to the aforementioned second state when the current state of the movable object is in the aforementioned first state. As another example, when the first state is the aforementioned first motion state and the second state is the aforementioned second motion state, the motion-sensing control device may respond to the selection of the control mode for the display device, by switching the current state of the movable object to the first motion state when the current state of the movable object is in the first motion state. When the movable object is in the unlocked state, if the user triggers the switching of the control object to the display device, the movable object may be automatically switched to a locked state, further ensuring the safety of the movable object.

As an example, both the first attitude information and the second attitude information may be associated with control object information. The control object information may be used to enable the display device and the movable object to determine the control object to which the received attitude information is directed. The control object may be one of the display device and the movable object.

As an example, the control object information may be generated by the motion-sensing control device based on the current state of the movable object, or it may be generated by the movable object based on the current state of the movable object, or it may be generated by the display device based on the current state of the movable object.

403, the motion-sensing control device generates the first attitude information in the control mode for the display device.

404, the motion-sensing control device sends the first attitude information to the display device.

As an example, a specific implementation of the motion-sensing control device using the first attitude information to control the display interface of the display device may include that the motion-sensing control device first generates the first attitude information, and then sends the first attitude information to the display device, such that the display device configures its display interface based on the first attitude information.

405, the display device configures the display interface of the display device based on the first attitude information.

For the display device in related technologies, taking glasses as an example, the original interaction methods of glasses are button-based or touchpad-based, which cannot realize functions requiring touchscreen interaction (the touchpads in related technologies only support up, down, left, or right swiping), such as selecting a focus point or selecting a target on the screen.

To address the above problem, the motion-sensing control device may utilize the first attitude information to control the display interface of the display device in various ways. For example, the first attitude information may be used to form a movable position point on the display interface, which may then be used to control the display interface. Controlling the movable position point using the attitude information may conveniently realize touchscreen-like interaction functions, such as selecting a focus point or selecting a target.

As an example, when a calibration instruction for the aforementioned position point is detected, the position point may be calibrated to a preset position on the display interface. When the display area is small, changes in the user's attitude leading to relative attitude changes in the display device or motion-sensing control device may cause the position point to disappear from the display interface. If the position point cannot be observed on the display interface, it may be calibrated to a preset position, making it easier for the user to observe.

The position point may be displayed in various ways. As an example, when switching from control mode for the movable object to control mode for the display device, a dynamic position point may be generated on the display interface. Alternatively, the position point may be displayed at a preset position on the display interface. This dynamic position point, displayed at a preset position, may allow users to quickly identify the current location of the position point when switching the control mode, improving operational efficiency. As another example, the position point may be displayed as a preset symbol on the display interface. It is worth noting that the above descriptions of position point display methods are merely illustrative, and other display methods may exist in practical applications, which are not limited to any particular method.

As an example, the preset symbol could be a cursor, and the position point may be a dynamically blinking cursor.

The aforementioned preset position may be implemented in various ways. For example, the preset position may be the center of the display interface of the display device, or other preset positions, which is not specifically limited here.

The position point may be calibrated to the preset position in several ways. For example, when the position point cannot be observed on the display interface, it may be calibrated to the preset position through a preset calibration action. For instance, the motion-sensing control device may be held horizontally and a preset button may be pressed to return the position point to the preset position, effectively resetting the yaw angle of the motion-sensing control device. As another example, if the position point is still not observable on the display interface after holding the motion-sensing control device horizontally and pressing the preset button, the device may be tilted up or down until the position point appears on the display interface. There is no specific limitation on the method used to calibrate the position point to the preset position.

There are various ways to control the display interface using the position point. As an example, in response to changes in the attitude of the motion-sensing control device, the position point may be moved to a region of interest (ROI) on the display interface. For instance, the position point may be moved from one selection icon to another on the display screen. Alternatively, in response to changes in the attitude of the motion-sensing control device, a target object on the display interface may be moved along with the position point. For instance, an image on the display screen may be moved from one position to another. Furthermore, in response to changes in the attitude of the motion-sensing device, a target object on the display interface may be moved to a ROI on the display interface. As another example, when the position point is located within the ROI of the display interface, in response to a user's object control instruction, the object within that ROI may be controlled to execute the corresponding object control instruction.

The execution of corresponding object control instructions by the object within the ROI may be controlled in various ways. For example, controlling the object within the ROI to execute the corresponding object control instructions may include controlling the object to execute at least one of the following: executing a confirmation instruction, executing an exit instruction, executing a selection instruction, executing a play instruction, or executing a pause instruction. It is worth noting that the above description of the method of controlling the object in the region of interest to execute the corresponding object control instruction is only an illustrative example. In practical applications, other control methods may exist, and no limitation is made here.

As an example, another way to control the display interface of the display device using the first attitude information may include: controlling the scaling of the display interface using the first attitude information; and controlling the scaling of the object within the display interface using the first attitude information. As another example, the object within the display interface may include a virtual screen, and the scaling of the virtual screen and the content displayed within the virtual screen may be controlled using the first attitude information.

As an example, the attitude information generated by the motion-sensing control device may be 3 degrees of freedom (3 DoF) attitude information, 6 DoF attitude information, or other types of information; and no specific limitation is made.

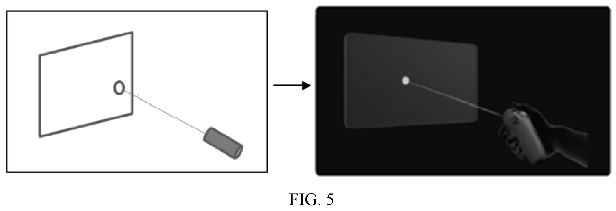

As shown in FIG. 5, the following is an exemplary description of a specific scenario for the formation of the position point according to an embodiment of the present disclosure. After the motion-sensing control device sends the first attitude information to the display device, the first attitude information may be converted into a virtual ray on the display interface of the display device (as shown in FIG. 5, the color of the virtual ray may be white or other colors, without limitation). This virtual ray may form the position point on the display interface, and the position point may be displayed in the form of a cursor (the cursor may be a circle or other shapes, without limitation). When the attitude information generated by the motion-sensing control device is 3 DoF attitude information, the projection relationship between the above cursor and the ray may be as follows. A virtual space is created, including a fixed display interface position and a fixed motion-sensing control device position. The default rotation orientation of the motion-sensing control device may point towards the center of the display interface. A line connecting the position of the motion-sensing control device and the display interface position may form the virtual ray. This virtual ray may be projected onto the display interface, obtaining its position. The endpoint of the virtual ray on the display interface may be the cursor position. Applying the attitude information of the motion-sensing control device, changes in its yaw angle may affect the left-right movement of the cursor on the display interface, and changes in its pitch angle may affect its up-down movement on the screen.

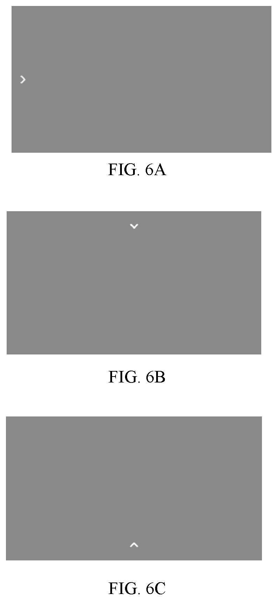

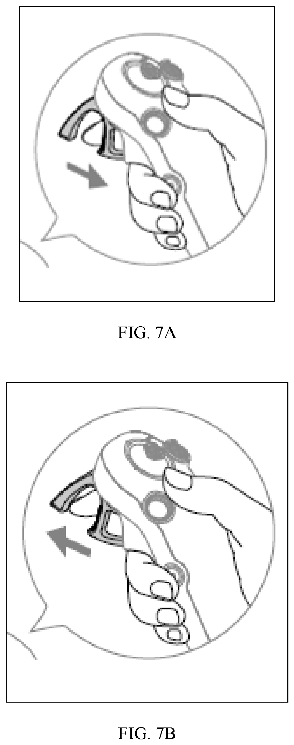

As shown in FIG. 6A to FIG. 7B, the following is an exemplary description of a control scenario of the motion-sensing control device and the resulting position point control scenario according to an embodiment of the present disclosure: The motion-sensing control device may include a preset button, such as a trigger button for controlling the throttle of the movable object (as shown in FIG. 7A to FIG. 7B), hereinafter referred to as the throttle trigger.

When the attitude of the motion-sensing control device changes, the device may generate attitude information in response to its own attitude change. Furthermore, based on the current state of the movable object, the device may determine whether to provide the control mode for the display device or the control mode for the movable object, and determine the specific control effect of the attitude information based on the throttle position.

If the control mode for the movable object is to be provided, the attitude information and the controlled object (the movable object) may be associated, and the information may be sent directly to the movable object along with the throttle position, or forwarded to the movable object via the display device. Upon receiving this information, the movable object may respond to the attitude information to control the direction and may respond the throttle position to control the speed.

If the control mode for the display device is to be provided, the attitude information and the controlled object (the display device) may be associated, and the information may be sent directly to the display device along with the throttle position, or forwarded to the display device via the movable object. Using the position point generated by the attitude information in conjunction with the throttle trigger, the menu interface of the display device may be controlled.

Rotating or tilting the motion-sensing control device up or down may move the position point to the arrow on the left side of the display interface (as shown in FIG. 6A), triggering the throttle trigger. At this time, it may be confirmed to open the display interface menu.

Triggering the throttle trigger may be achieved by pressing the throttle trigger as shown in FIG. 7A. When triggering the throttle trigger, the size of the position point may be changed, for example, the position point may become smaller.

Moving the position point to the arrow at the top of the display interface (as shown in FIG. 6B) may trigger the throttle trigger, opening the quick settings panel for quick adjustments such as recording the movable object and enhancing image display.

Moving the position point to the arrow at the bottom of the display interface (as shown in FIG. 6C) may trigger the throttle trigger, opening the camera parameter setting panel for the movable object and allowing adjustment of various camera parameters.

As shown in FIG. 7A, pressing the throttle trigger may decrease the position point's size; releasing the throttle trigger to restore the throttle trigger from the pressed state may restore the position point to its original size; and as shown in FIG. 7B, pushing the throttle trigger outwards may increase the position point's size. Other size changes may also be possible when pressing or pushing the throttle trigger, and specific variations are not limited.

As an example, when the position point hovers over a control on the display interface (such as an option in the menu mentioned above), the control may enlarge. When the position point leaves the control, the control may return to its original size. If the position point enters a sub-control of the control, the parent control may remain larger or the table may take another form. There is no limitation on this.

The throttle trigger described above may have various implementations. As an example, the throttle trigger may be single-stage (i.e., the pressing amplitude is only one stage) or two-stage (the pressing amplitude has two stages). As another example, for a two-stage throttle trigger, a pause may be set when lightly pressing to the boundary between the first and second stages. As yet another example, when controlling the movable object, pressing the throttle trigger to different positions may control the movable object to switch between different actions. As yet another example, when the movable object is an aircraft, when lightly pressing the throttle trigger to enter the first stage position, the motion-sensing control device may swing left and right in the vertical direction, allowing for adjusting the aircraft's heading. Pressing the throttle trigger to the second stage position may control the aircraft to move towards the location shown on the display screen. Pushing the throttle trigger outwards may control the aircraft to fly backwards. The greater the force applied to the throttle trigger, the higher the aircraft's speed. When the throttle trigger is released, the aircraft may be in a locked state (i.e., releasing the throttle trigger directly enters a locked state, where the motion-sensing control device generates an attitude change but does not trigger the throttle trigger, so the aircraft will not change attitude).

As an example, while pressing the throttle trigger and moving the location point, a selection box may be drawn within the selectable area on the display screen to select regions of interest, such as selecting a photographic object or a tracked object.

In some examples, the selected photographic object may be captured by the movable object, and the camera on the movable object may perform operations such as focusing, metering, or temperature measurement on the photographed object. In some examples, the selected tracking object may be acquired by the movable object, which continuously tracks the tracking object. For instance, the movable object may maintain a preset orientation, height, or distance from the tracking object, or keep the tracking object in a preset position within the movable object's field of view. The tracking object may be a stationary or movable object.

As an example, by pressing the throttle trigger and moving the position point, the target object may be moved within a draggable interface. For instance, when a user views an image captured by the movable object on the display device, the image position may be moved.

After selecting an interface, moving the motion-sensing control forward or backward may adjust the screen size. For example, in glasses, a laser pointer may be used to select the large screen on the glasses interface to adjust the cursor, and after pressing the two-stage trigger, moving the motion-sensing control forward or backward may change the screen size. Moving the motion-sensing control forward or backward may also be done by pushing a joystick on the motion-sensing control.

As an example, when a user previews a photo or video stored on the display device, playback may be controlled via the motion-sensing control device. As another example, pressing the throttle trigger may pause or resume playback, while pushing the throttle trigger out may exit playback. As yet another example, pressing and holding the throttle trigger while moving the position point may adjust the playback progress. As yet another example, moving the position point to the arrow at the top of the display interface and pressing the throttle trigger may open playback settings, such as adjusting display brightness or playback volume.

It is worth noting that the above description of the control scenario of the motion-sensing control device and the resulting position point control scenario is merely illustrative. In practical applications, other control scenarios are possible, and no specific limitation is made.

406, in the control mode for the movable object, the motion-sensing control device generates second attitude information.

As an example, a specific implementation of the motion-sensing control device using the second attitude information to control the movable object may involve the motion-sensing control device first generating the second attitude information, such that the movable object, upon finally receiving the second attitude information generated by the motion-sensing control device, executes a response measure corresponding to the second attitude information.

407, the motion-sensing control device sends the second attitude information to the display device;

408, the display device forwards the second attitude information sent by the motion-sensing control device to the movable object.

As an example, the motion-sensing control device may send the second attitude information to the display device via a first communication link, such that the display device may forward the second attitude information to the movable object via a second communication link, thereby controlling the movable object using the second attitude information.

The display device may receive the first attitude information generated by the motion-sensing control device in various ways. As an example, the motion-sensing control device may directly send the first attitude information to the display device, as described in 404. As another example, the motion-sensing control device may also send the first attitude information to the movable object via a third communication link, and the movable object may forward the first attitude information to the display device via a fourth communication link, enabling the motion-sensing control device to control the display device using the first attitude information.

When the display device receives the first attitude information generated by the motion-sensing control device in the manner described in 404, where the motion-sensing control device directly sends the first attitude information to the display device, as an example, the motion-sensing control device may directly send the first attitude information to the display device using a first communication link and directly send the second attitude information to the movable object using a third communication link.

As an example, the first communication link or fourth communication link may be near-field communication links, and the second communication link or third communication link may be far-field communication links.

In the scenario where the display device receives the second attitude information via the first communication link and forwards the second attitude information to the movable object via the second communication link, since both the motion-sensing control device and the display device are user terminals and are relatively close, they may communicate using near-field communication (i.e., the first communication link is a near-field communication link), such as Bluetooth or Wi-Fi. The communication distance between the movable object and the display device is often longer, so they may communicate using far-field communication (i.e., the second communication link is a far-field communication link), such as SDR communication or mobile communication networks like 5G, 4G, and 3G. On one hand, because the motion-sensing control device and the display device are relatively close and the communication latency is low, when the display device forwards the attitude information generated by the motion-sensing control device to the movable object, the movable object's response may depend on the latency of the communication link between the display device and the movable object. Therefore, the image displayed by the display device may be closer to the movable object's response to the motion-sensing control device. On the other hand, when the display device is user-worn glasses, the head's degrees of freedom are relatively lower than those of motion-sensing control devices. Therefore, when a user controls the movable object, the motion-sensing control device may experience significant spatial orientation changes because of hand movements, while the glasses experience less. Therefore, if the attitude information generated by the motion-sensing control device is directly sent to the movable object, the large orientation changes of the motion-sensing control device may lead to a large angle deviation between the antenna inside the device and the antenna on the movable object, resulting in poor communication signals. However, the small orientation changes of the glasses may mean that the angle changes between the antenna inside the glasses and the antenna on the movable object are not significant, resulting in relatively stable communication between the glasses and the movable object. Therefore, using the glasses as a communication relay to forward the attitude information from the motion-sensing control device to the movable object ensures that the attitude information controlled by the motion-sensing control device is less likely to fail to be transmitted to the movable object in a timely manner because of the easily changing orientation of the motion-sensing control device.

In the scenario where the motion-sensing control device directly sends first attitude information to the display device via the first communication link and directly sends second attitude information to the movable object via the third communication link, the motion-sensing control device may simultaneously send the first attitude information to both the display device and the movable object via both the first and third communication links, or simultaneously send the second attitude information to both the display device and the movable object via both the first communication link and third communication link. The display device and the movable object may then determine whether the received attitude information pertains to the display device or the movable object. Since both the display device and the movable object may receive messages from the motion-sensing control device, the movable object may not perceive a communication interruption when the motion-sensing control device controls the display interface of the display device, avoiding the movable object mistakenly believing that the communication signal with the motion-sensing control device is interrupted because of a prolonged lack of communication messages, as a signal interruption between the movable object and the motion-sensing control device could lead to the movable object returning to its home position.

409, the movable object performs a response measure corresponding to the second attitude information.

It may be understood that the movable object may be an object capable of moving in real space.

As an example, the display device may be configured to display information associated with the movable object on the display interface.

As an example, the information associated with the movable object may include at least one of the following: the velocity of the movable object, the acceleration of the movable object, the position of the movable object, or an environmental image captured by the movable object. No specific limitation may be made thereto.

The movable object may perform the response measure corresponding to the second attitude information in various ways. As an example, the movable object may change its attitude in response to the second attitude information.

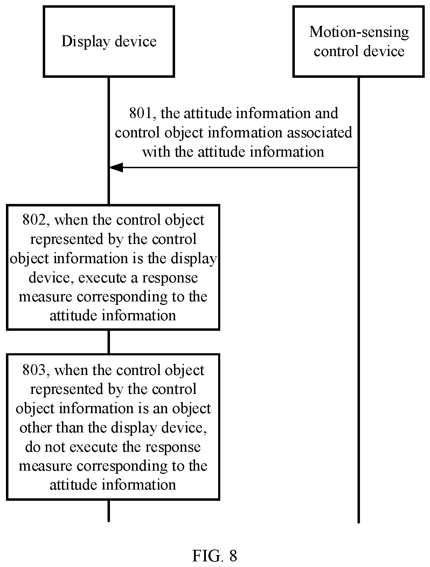

Another embodiment of the motion-sensing control device controlling the display device using the generated attitude information will be described below. The flowchart of this embodiment is shown in FIG. 8. The motion-sensing control device may generate the attitude information in response to its own attitude changes. In this embodiment, the control method may include:
801, the motion-sensing control device sends the attitude information and control object information associated with the attitude information to the display device.

It may be understood that the motion-sensing control device may generate the attitude information in response to its own attitude changes.

The motion-sensing control device may send the attitude information and control object information associated with the attitude information to the display device in various ways. Specific sending methods may be found in the descriptions of any of the embodiments above, and will not be repeated here.

802, when the control object represented by the control object information is the display device, the display device executes a response measure corresponding to the attitude information.

The display device may execute the response measure corresponding to the attitude information in various ways. For example, the display device may configure its display interface based on the attitude information.

The display device may configure its display interface based on the attitude information generated by the motion-sensing control device in various ways. Specific configuration methods may be found in the descriptions of any of the embodiments above, and will not be repeated here.

803, when the control object represented by the control object information is an object other than the display device, the display device does not execute the response measure corresponding to the attitude information.

The object other than the display device may have various specific implementations. For example, the object other than the display device may include the movable object, which may be an object capable of moving in real space. The specific implementation of the object other than the display device is not limited.

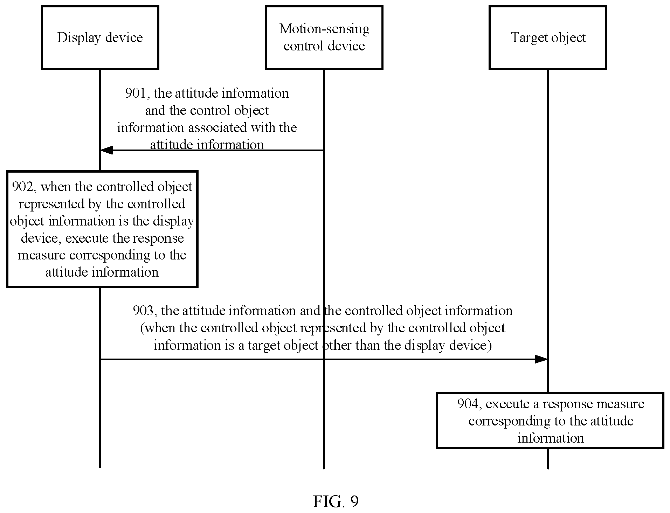

The motion-sensing control device may utilize the generated attitude information to control the display device or the movable object in various ways. Different embodiments may be provided. The following describes another embodiment of the motion-sensing control device controlling the display device using the generated attitude information. The flow chart of this embodiment may be shown in FIG. 8. The motion-sensing control device may generate the attitude information in response to changes in its own attitude. One embodiment of the control method provided in this application may include:
The following describes another embodiment of the motion-sensing control device controlling the display device using the generated attitude information. The flowchart of this embodiment may be shown in FIG. 9. The motion-sensing control device may generate the attitude information in response to changes in its own attitude. In this embodiment, the control method may include:
901, the motion-sensing control device sends the attitude information and the control object information associated with the attitude information to the display device.

It may be understood that the motion-sensing control device may generate the attitude information in response to changes in its own attitude.

The motion-sensing control device may send the attitude information and the control object information associated with the attitude information to the display device in various ways. Specific sending methods may be found in the descriptions of any of the embodiments above, and will not be repeated here.

902, when the controlled object represented by the controlled object information is the display device, the display device executes the response measure corresponding to the attitude information.

The display device may execute the response measure corresponding to the attitude information in various ways. For example, the display device may configure its display interface based on the attitude information.

The display device may configure its display interface based on the attitude information generated by the motion-sensing control device in various ways. Specific configuration methods may be found in the descriptions of any of the embodiments above, and will not be repeated here.

903, when the controlled object represented by the controlled object information is a target object other than the display device, the attitude information and the controlled object information are forwarded to the target object.

904, the target object executes a response measure corresponding to the attitude information.

The target object may have various specific implementations. For example, the target object may be the movable object, which may be an object capable of moving in real space.

When the target object is the movable object, the display device may forward the attitude information and the controlled object information to the movable object in various ways. Specific sending methods may be found in the descriptions of the embodiments above, and will not be repeated here.

The target object may perform the response measure corresponding to the attitude information in a variety of ways. For example, the target object may respond to the attitude information by changing its attitude, and the present disclosure has no specific limitation on this.

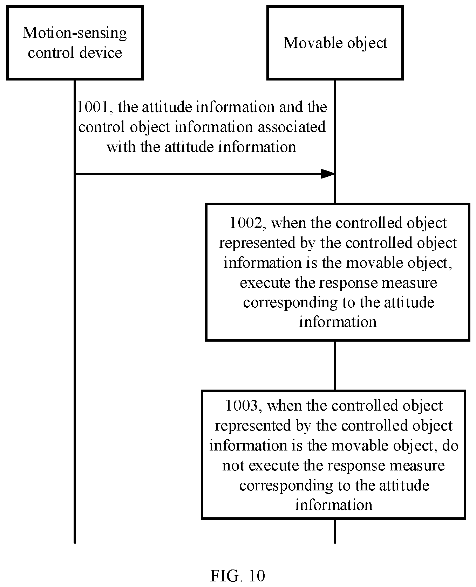

The following describes another embodiment of the motion-sensing control device controlling the display device using the generated attitude information. The flowchart of this embodiment may be shown in FIG. 10. The motion-sensing control device may generate the attitude information in response to changes in its own attitude. In this embodiment, the control method may include:
1001, the motion-sensing control device sends the attitude information and the control object information associated with the attitude information to the display device.

The motion-sensing control device may send the attitude information and the control object information associated with the attitude information to the display device in various ways. Specific sending methods may be found in the descriptions of any of the embodiments above, and will not be repeated here.

1002, when the controlled object represented by the controlled object information is the movable object, the movable object executes the response measure corresponding to the attitude information.

The movable object may execute the response measure corresponding to the attitude information in various ways. For example, the movable object may be an object capable of moving in real space, and may change its attitude in response to the attitude information.

1003, when the controlled object represented by the controlled object information is an object other than the movable object, the movable object does not execute the response measure corresponding to the attitude information.

For example, the object other than the movable object may be the display device.

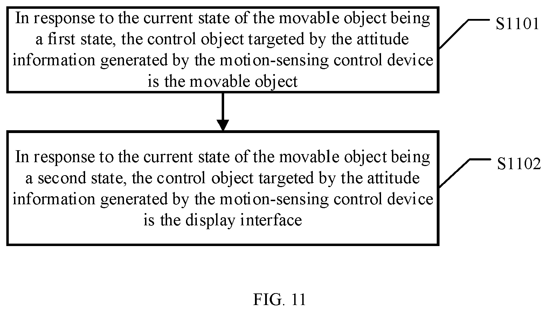

The following describes another embodiment of the motion-sensing control device using generated attitude information to control the display device and the movable object. The flowchart of this embodiment may be shown in FIG. 11. This embodiment may be applicable to scenarios where the motion-sensing control device controls both the display device and the movable object. The motion-sensing control device may generate the attitude information in response to changes in its own attitude. In this embodiment, the control method may include:
S1101, in response to the current state of the movable object being a first state, the control object targeted by the attitude information generated by the motion-sensing control device is the movable object.
S1102, in response to the current state of the movable object being a second state, the control object targeted by the attitude information generated by the motion-sensing control device is the display interface.

As an example, the control mode for the display device and the control mode for the movable object may be automatically switched based on the current state of the movable object. As an example, the movable object may be an object capable of moving in real space.

As an example, the state information sent by the movable object may be received to determine the current state of the movable object based on the state information.

As an example, the state information may include the communication state of the movable object and/or the motion state of the movable object.

As an example, the movable object and the display device may be communicatively connected to each other, and the communication state may include the movable object and the display device being in a communicatively connected state or the movable object and the display device being in a communicatively disconnected state.

As an example, the first state may include the movable object and the display device being in the communicatively connected state; the second state may include the movable object and the display device being in the communicatively connected state or the movable object and the display device being in the communicatively disconnected state.

As an example, the movable object includes multiple motion states, the first state may include the movable object being in a first motion state, and the second state may include the movable object being in a second motion state.

As an example, the movable object may include an aircraft, and the first motion state may include at least one of the following: the aircraft being propeller-driven, the aircraft being taking off, the aircraft being in flight, the aircraft being returned to base, the aircraft being landed, or the aircraft has landed but has not stopped propellers.

As an example, the second motion state may include the movable object being in a locked state, in which the movable object stops moving.

As an example, the movable object may include an aircraft, and the locked state may include the aircraft being in a hovering state.

As an example, the motion state of the movable object may be changed based on at least one of the following: an operator's instruction to the movable object, or a factor in the movable object's motion environment.

As an example, the control mode of the motion-sensing control device may be related to a user-triggered instruction received by the motion-sensing control device.

As an example, the user-triggered instruction may include a user instruction to select a control mode for the motion-sensing control device or a user instruction to switch the state of the movable object.

As an example, the selection instruction may include selecting the control mode for the display device or selecting the control mode for the movable object.

As an example, the switching instruction may include switching the communication state of the movable object or switching the motion state of the movable object.

As an example, in response to the selection of the control mode for the display device, when the current state of the movable object is the first state, the current state of the movable object may be switched to the second state.

As an example, switching the current state of the movable object to the second state when the movable object is currently in the first state may include:
switching the movable object to be in the second motion state when it is in the first motion state.

As an example, the attitude information generated by the motion-sensing control device may be associated with the control object information. The control object information may be used to enable the display device and the movable object to determine the control object to which the received attitude information pertains. The control object may be one of the display device or the movable object.

As an example, the control object information may be generated by the motion-sensing control device based on the current state of the movable object; or, the control object information may be generated by the display device based on the current state of the movable object.

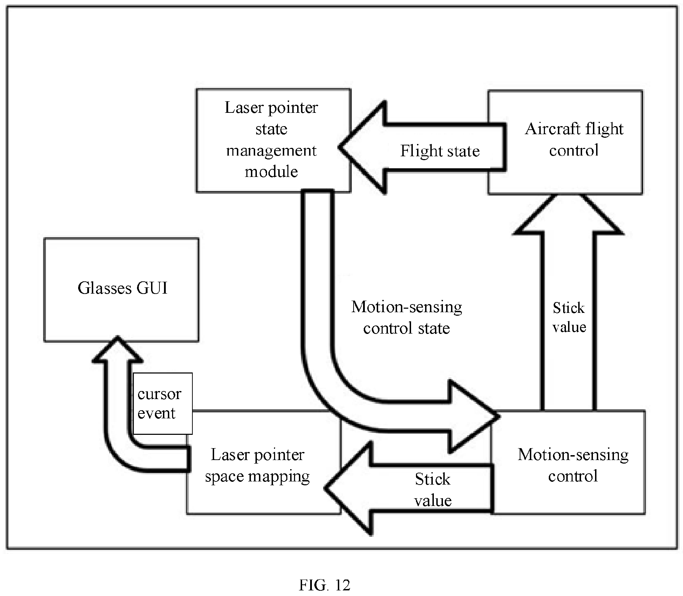

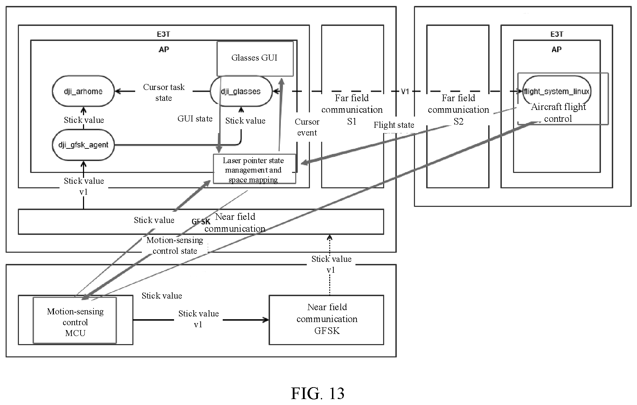

FIG. 12 and FIG. 13 show an exemplary three-way communication control scenario of the motion-sensing control device ("motion-sensing control" in the figure), the display device (taking flight glasses as an example, "glasses GUI" may be the display interface of the flight glasses), and the movable object (taking an unmanned aerial vehicle as an example, i.e., "aircraft" in the figure) mentioned in the embodiments of the present disclosure. The attitude information generated by the motion-sensing control device may include "stick measurement". The "laser pointer" in FIG. 12 and FIG. 13 may be understood as a virtual laser pointer formed by the motion-sensing control device and the virtual ray emitted from the motion-sensing control device as described above. As shown in FIG. 12 and FIG. 13, as an example, the aircraft flight control may send the flight state (flight control state) to the laser pointer state management module via far-field communication (S2 in FIG. 13). The laser pointer state management module may determine the state of the motion-sensing control, i.e., the control mode of the motion-sensing control device, based on the received flight state. According to the control mode of the motion-sensing control, the corresponding control object (aircraft or glasses GUI) may be written into the stick value generated by the motion-sensing control. As shown in FIG. 13, the stick value generated by the motion-sensing control may be sent to the glasses via near-field communication (GFSK in FIG. 13) and converted into a cursor event of the glasses GUI through laser pointer spatial mapping. The stick value generated by the motion-sensing control may also be sent directly to the aircraft flight control via far-field communication, or the glasses may forward the received stick value to the aircraft flight control via far-field communication. The specific method is not limited. The control object written in the stick value generated by the motion-sensing control may respond accordingly after receiving the stick value.

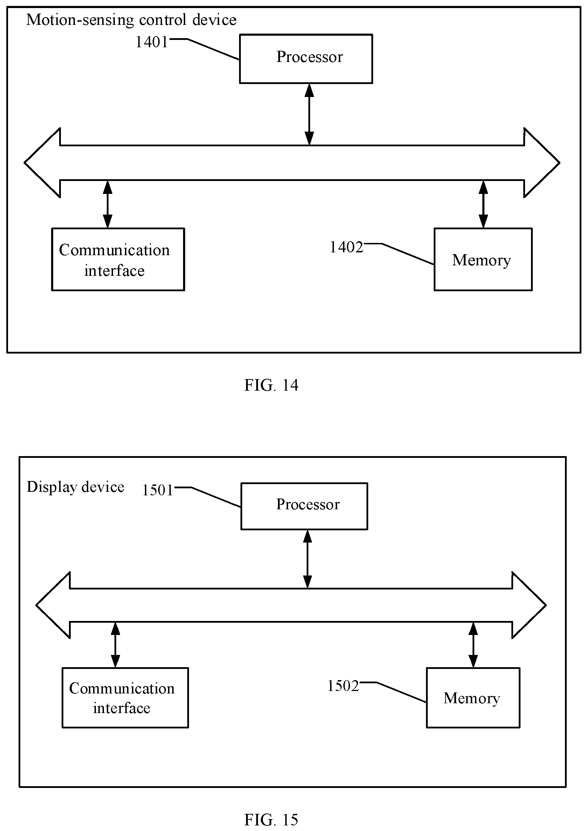

The present disclosure embodiment also provides a motion-sensing control device, as shown in FIG. 14, including:
a processor 1401;
a memory 1402 for storing processor-executable instructions,
where, the processor 1401 is configured to implement the control method described in any of the embodiments above.

As an example, the motion-sensing control device may include a remote controller capable of controlling the movable object.

The present disclosure also provides a display device, as shown in FIG. 15. The electronic device includes:
a processor 1501;
a memory 1502 for storing processor-executable instructions;
where, the processor 1501 is configured to implement the control method described in any of the embodiments above.

As an example, the display device may include head-mounted glasses.

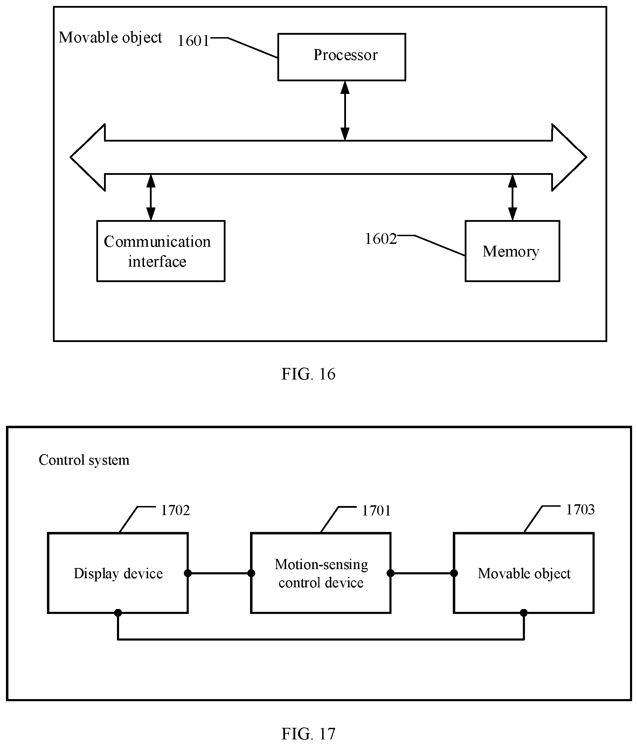

The present disclosure also provides a movable device, as shown in FIG. 16. The movable device includes:
a processor 1601;
a memory 1602 for storing processor-executable instructions;
where, the processor 1601 is configured to implement the control method described in any of the embodiments above.

As an example, the movable object may include an unmanned aerial vehicle, an unmanned vehicle, or an unmanned boat.

The present disclosure also provides a control system, as shown in FIG. 17. The control system includes a motion-sensing control device 1701 described in any of the above embodiments, a display device 1702 described in any of the above embodiments, and a movable object 1703 described in any of the above embodiments. The motion-sensing control device 1701 may generate attitude information in response to its own attitude changes. The movable object 1703 may be an object capable of moving in real space. Information associated with the movable object 1703 may be displayed on the display interface of the display device 1702.

The present disclosure also provides a computer-readable storage medium storing a computer program thereon. When the computer program is executed by a processor, the processor may implement the control method described in any of the above embodiments.

The embodiments of the present disclosure have been described above. However, these embodiments are for illustrative purposes only and are not intended to limit the scope of the present disclosure. Although various embodiments have been described above, this does not mean that the measures in the various embodiments cannot be used advantageously in combination. Various substitutions and modifications may be made by those skilled in the art without departing from the scope of the present disclosure, and all such substitutions and modifications should fall within the scope of the present disclosure.

## Claims

1. A control method applied to a motion-sensing control device, the motion-sensing control device being able to generate attitude information in response to its own attitude changes, comprising:
obtaining a current state of a movable object;
automatically switching between a control mode for a display device and a control mode for the movable object based on the current state of the movable object;
generating first attitude information in the control mode for the display device, and using the first attitude information to control the display interface of the display device; and
generating second attitude information in the control mode for the movable object, and using the second attitude information to control the movable object, wherein the movable object is an object capable of moving in real space.

2. The control method according to claim 1, wherein automatically switching between the control mode for the display device and the control mode for the movable object based on the current state of the movable object, includes:
in response to the current state of the movable object being a first state, determining a control object to which the attitude information generated by the motion-sensing control device is directed to be the movable object; and
in response to the current state of the movable object being a second state, determining a control object to which the attitude information generated by the motion-sensing control device is directed to be the display interface.

3. The control method according to claim 2, further comprising:
receiving state information sent by the movable object, to determine the current state of the movable object based on the state information.

4. The control method according to claim 3, wherein:
the state information includes a communication state of the movable object and/or a motion state of the movable object.

5. The control method according to claim 4, wherein:
the movable object and the display device are communicatively connected to each other, and the communication state includes the movable object and the display device being in a communicatively connected state or the movable object and the display device being in a communicatively disconnected state.

6. The control method according to claim 5, wherein:
the first state includes the movable object and the display device being in the communicatively connected state; and
the second state includes the movable object and the display device being in the communicatively connected state or the movable object and the display device being in the communication disconnected state.

7. The control method according to claim 4, wherein:
the movable object includes multiple motion states, wherein the first state includes the movable object being in a first motion state and the second state includes the movable object being in a second motion state.

8. The control method according to claim 7, wherein:
the movable object includes an aircraft, and the first motion state includes at least one of the following: the aircraft being in the process of propulsion, the aircraft being in the process of takeoff, the aircraft being in flight, the aircraft being in the process of returning to base, the aircraft being in the process of landing, or the aircraft being landed while not stopping propulsion.

9. The control method according to claim 7, wherein:
the second motion state includes the movable object being in a locked state, wherein the movable object in the locked state stops moving.

10. The control method according to claim 9, wherein:
the movable object includes an aircraft, and the locked state includes the aircraft being in a hovering state.

11. The control method according to claim 7, wherein:
the motion state of the movable object is able to be changed based on at least one of an operation instruction of an operator of the movable object or motion environment of the movable object.

12. The control method according to any one of claims 1 to 11, wherein:
the control mode of the motion-sensing control device is related to a user trigger instruction received by the motion-sensing control device.

13. The control method according to claim 12, wherein:
the user trigger instruction includes an instruction for selecting the control mode of the motion-sensing control device or an instruction for switching the state of the movable object.

14. The control method according to claim 13, wherein:
the selection instruction includes selecting the control mode for the display device or the control mode for the movable object.

15. The control method according to claim 13, wherein:
the switching instruction includes switching the communication state of the movable object or switching the motion state of the movable object.

16. The control method according to claim 14, further comprising:
in response to the selection of the control mode for the display device, when the current state of the movable object is the first state, switching the current state of the movable object to the second state.

17. The control method according to claim 16, wherein when the current state of the movable object is the first state, switching the current state of the movable object to the second state, includes:
when the movable object is in the first motion state, switching the movable object to be in the second motion state.

18. The control method according to claim 1, wherein:
both the first attitude information and the second attitude information are associated with control object information; and
the control object information is used to enable the display device and the movable object to determine the control object to which the received attitude information is directed, wherein the control object is one of the display device or the movable object.

19. The control method according to claim 18, wherein:
the control object information is generated by the motion-sensing control device based on the current state of the movable object, or the control object information is generated by the movable object based on the current state of the movable object, or the control object information is generated by the display device based on the current state of the movable object.

20. The control method according to claim 1, wherein controlling the display interface of the display device using the first attitude information includes:
using the first attitude information to form a movable position point on the display interface, to control the display interface using the position point.

21. The control method according to claim 20, further comprising:
when detecting a calibration instruction for the position point, calibrating the position point to a preset position on the display interface.

22. The control method according to claim 20, further comprising:
when switching from the control mode for the movable object to the control mode for the display device, generating a dynamic position point on the display interface, and/or displaying the position point at a preset position on the display interface.

23. The control method according to claim 21 or claim 22, wherein the preset position is a center position of the display interface.

24. The control method according to claim 21, wherein the position point is displayed on the display interface with a preset symbol.

25. The control method according to claim 20, wherein controlling the display interface using the position point includes:
in response to a change in the attitude of the motion-sensing control device, controlling the position point to move to a region of interest in the display interface; and/or
in response to a change in the attitude of the motion-sensing control device, controlling a target object in the display interface to move with the movement of the position point.

26. The control method according to claim 25, further comprising:
when the position point is located at the region of interest of the display interface, in response to a user object control instruction, controlling an object in the region of interest to execute a corresponding object control instruction.

27. The control method according to claim 26, wherein controlling the object in the region of interest to execute the corresponding object control instruction includes at least one of:
controlling the object to execute a confirmation instruction, controlling the object to execute an exit instruction, controlling the object to execute a selection instruction, controlling the object to execute a play instruction, or controlling the object to execute a pause instruction.

28. The control method according to claim 1, wherein controlling the display interface of the display device using the first attitude information includes:
controlling a scaling of the display interface of the display device, and/or controlling a scaling of an object within the display interface.

29. The control method according to claim 28, wherein:
the object within the display interface includes a virtual screen, and controlling the scaling of the object within the display interface includes: controlling the scaling of the virtual screen, and/or controlling the scaling of content displayed within the virtual screen.

30. The control method according to claim 1, wherein controlling the movable object using the second attitude information includes:
sending the second attitude information to the display device via a first communication link, such that the display device forwards the second attitude information to the movable object via a second communication link, thereby controlling the movable object using the second attitude information.

31. The control method according to claim 1, wherein controlling the display interface of the display device using the first attitude information includes:
sending the first attitude information to the movable object via a third communication link, such that the movable object forwards the first attitude information to the display device via a fourth communication link, thereby controlling the display device using the first attitude information.

32. The control method according to claim 1, wherein the first attitude information is transmitted to the display device via a first communication link and the second attitude information is transmitted to the movable object via a third communication link.

33. The control method according to any one of claims 30 to 32, wherein the first communication link or the fourth communication link is a near-field communication link, and the second communication link or the third communication link is a far-field communication link.

34. The control method according to claim 1, wherein the display device is configured to display information associated with the movable object on the display interface.

35. The control method according to claim 34, wherein the information associated with the movable object includes at least one of the following: a velocity of the movable object, acceleration of the movable object, a position of the movable object, or an environmental image acquired by the movable object.

36. A control method applied to a display device, comprising:
receiving first attitude information sent by a motion-sensing control device, and configuring a display interface of the display device based on the first attitude information, wherein the motion-sensing control device is capable of generating attitude information in response to changes in its own attitude; and
receiving second attitude information sent by the motion-sensing control device, and forwarding the second attitude information to a movable object, such that the motion-sensing control device controls the movable object using the second attitude information, wherein the movable object is an object capable of moving in real space.

37. The control method according to claim 36, wherein:
the motion-sensing control device provides a control mode for the display device and a control mode for the movable object;
the control mode of the motion-sensing control device is related to a current state of the movable object;
in response to the current state of the movable object being a first state, a control object to which the attitude information sent by the motion-sensing control device is directed is the movable object; and
in response to the current state of the movable object being a second state, a control object to which the attitude information sent by the motion-sensing control device is directed is the display interface.

38. The control method according to claim 37, further comprising:
receiving state information sent by the movable object, to determine the current state of the movable object based on the state information.

39. The control method according to claim 38, wherein:
the state information includes a communication state of the movable object and/or a motion state of the movable object.

40. The control method according to claim 39, wherein:
the movable object and the display device are communicatively connected to each other, and the communication state includes the movable object and the display device being in a communicatively connected state or the movable object and the display device being in a communicatively disconnected state.

41. The control method according to claim 40, wherein:
the first state includes the movable object and the display device being in the communicatively connected state; and
the second state includes the movable object and the display device being in the communicatively connected state or the movable object and the display device being in the communication disconnected state.

42. The control method according to claim 39, wherein:
the movable object includes multiple motion states, wherein the first state includes the movable object being in a first motion state and the second state includes the movable object being in a second motion state.

43. The control method according to claim 42, wherein:
the movable object includes an aircraft, and the first motion state includes at least one of the following: the aircraft being in the process of propulsion, the aircraft being in the process of takeoff, the aircraft being in flight, the aircraft being in the process of returning to base, the aircraft being in the process of landing, or the aircraft being landed but not stopping propulsion.

44. The control method according to claim 42, wherein:
the second motion state includes the movable object being in a locked state, wherein the movable object in the locked state stops moving.

45. The control method according to claim 44, wherein:
the movable object includes an aircraft, and the locked state includes the aircraft being in a hovering state.

46. The control method according to claim 42, wherein:
the motion state of the movable object is able to be changed based on at least one of an operation instruction of an operator of the movable object or motion environment of the movable object.

47. The control method according to any one of claims 37 to 46, wherein:
the control mode of the motion-sensing control device is related to a user trigger instruction received by the motion-sensing control device.

48. The control method according to claim 47, wherein:
the user trigger instruction includes an instruction for selecting the control mode of the motion-sensing control device or an instruction for switching the state of the movable object.

49. The control method according to claim 48, wherein:
the selection instruction includes selecting the control mode for the display device or the control mode for the movable object.

50. The control method according to claim 48, wherein:
the switching instruction includes switching the communication state of the movable object or switching the motion state of the movable object.

51. The control method according to claim 49, further comprising:
in response to the selection of the control mode for the display device, when the current state of the movable object is the first state, switching the current state of the movable object to the second state.

52. The control method according to claim 51, wherein when the current state of the movable object is the first state, switching the current state of the movable object to the second state, includes:
when the movable object is in the first motion state, switching the movable object to be in the second motion state.

53. The control method according to claim 36, wherein:
both the first attitude information and the second attitude information are associated with control object information; and
the control object information is used to enable the display device and the movable object to determine the control object to which the received attitude information is directed, wherein the control object is one of the display device or the movable object.

54. The control method according to claim 53, wherein:
the control object information is generated by the motion-sensing control device based on the current state of the movable object, the control object information is generated by the movable object based on the current state of the movable object, or the control object information is generated by the display device based on the current state of the movable object.

55. The control method according to claim 36, wherein:
configuring the display interface of the display device using the first attitude information includes: using the first attitude information to form a movable position point on the display interface, to control the display interface based on the position point.

56. The control method according to claim 55, further comprising:
when detecting a calibration instruction for the position point, calibrating the position point to a preset position on the display interface.

57. The control method according to claim 55, further comprising:
when switching from the control mode for the movable object to the control mode for the display device, generating a dynamic position point on the display interface, and/or displaying the position point at a preset position on the display interface.

58. The control method according to claim 56 or claim 57, wherein the preset position is a center position of the display interface.

59. The control method according to claim 56, wherein the position point is displayed on the display interface with a preset symbol.

60. The control method according to claim 55, wherein configuring the display interface using the position point includes:
in response to a change in the attitude of the motion-sensing control device, controlling the position point to move to a region of interest in the display interface; and/or
in response to a change in the attitude of the motion-sensing control device, controlling a target object in the display interface to move with the movement of the position point.

61. The control method according to claim 60, further comprising:
when the position point is located at the region of interest of the display interface, in response to a user object control instruction, controlling an object in the region of interest to execute a corresponding object control instruction.

62. The control method according to claim 61, wherein controlling the object in the region of interest to execute the corresponding object control instruction includes at least one of:
controlling the object to execute a confirmation instruction, controlling the object to execute an exit instruction, controlling the object to execute a selection instruction, controlling the object to execute a play instruction, or controlling the object to execute a pause instruction.

63. The control method according to claim 36, wherein configuring the display interface of the display device using the first attitude information includes:
controlling a scaling of the display interface of the display device, and/or controlling a scaling of an object within the display interface.

64. The control method according to claim 63, wherein:
the object within the display interface includes a virtual screen, and controlling the scaling of the object within the display interface includes: controlling the scaling of the virtual screen, and/or controlling the scaling of content displayed within the virtual screen.

65. The control method according to claim 36, wherein making the motion-sensing control device control the movable object using the second attitude information includes:
receiving the second attitude information via a first communication link, such that the second attitude information is forwarded to the movable object via a second communication link to make the motion-sensing control device control the movable object using the second attitude information.

66. The control method according to claim 36, wherein :
the first attitude information is sent to the movable object via a third communication link by the motion-sensing device; and
controlling the display interface of the display device using the first attitude information includes: receiving the first attitude information forwarded by the movable object via a fourth communication link, thereby controlling the display device based on the first attitude information.

67. The control method according to claim 36, wherein the first attitude information is received via a first communication link from the motion-sensing device.

68. The control method according to any one of claims 65 to 67, wherein the first communication link or the fourth communication link is a near-field communication link, and the second communication link or the third communication link is a far-field communication link.

69. The control method according to claim 36, wherein the display device is configured to display information associated with the movable object on the display interface.

70. The control method according to claim 69, wherein the information associated with the movable object includes at least one of the following: a velocity of the movable object, acceleration of the movable object, a position of the movable object, or an environmental image acquired by the movable object.

71. A control method applied to a display device, comprising:
receiving attitude information and control object information associated with the attitude information sent by a motion-sensing control device, wherein the motion-sensing control device is capable of generating attitude information in response to changes in its own attitude;
when a control object represented by the control object information is the display device, executing a response measure corresponding to the attitude information; and
when the control object represented by the control object information is an object other than the display device, not executing the response measure corresponding to the attitude information.

72. The control method according to claim 71, wherein executing the response measure corresponding to the attitude information includes: configuring the display interface of the display device based on the attitude information.

73. The control method according to claim 72, wherein the object other than the display device is a movable object, and the movable object is an object capable of moving in real space.

74. The control method according to claim 73, wherein:
the motion-sensing control device provides a control mode for the display device and a control mode for the movable object;
the control mode of the motion-sensing control device is related to the current state of the movable object;
in response to the current state of the movable object being a first state, the control object to which the attitude information sent by the motion-sensing control device is directed is the movable object; and
in response to the current state of the movable object being a second state, the control object to which the attitude information sent by the motion-sensing control device is directed is the display interface.

75. The control method according to claim 74, further comprising:
receiving state information sent by the movable object, to determine the current state of the movable object based on the state information.

76. The control method according to claim 75, wherein:
the state information includes a communication state of the movable object and/or a motion state of the movable object.

77. The control method according to claim 76, wherein:
the movable object and the display device are communicatively connected to each other, and the communication state includes the movable object and the display device being in a communicatively connected state or the movable object and the display device being in a communicatively disconnected state.

78. The control method according to claim 77, wherein:
the first state includes the movable object and the display device being in the communicatively connected state; and
the second state includes the movable object and the display device being in the communicatively connected state or the movable object and the display device being in the communication disconnected state.

79. The control method according to claim 76, wherein:
the movable object includes multiple motion states, wherein the first state includes the movable object being in a first motion state and the second state includes the movable object being in a second motion state.

80. The control method according to claim 79, wherein:
the movable object includes an aircraft, and the first motion state includes at least one of the following: the aircraft being in the process of propulsion, the aircraft being in the process of takeoff, the aircraft being in flight, the aircraft being in the process of returning to base, the aircraft being in the process of landing, or the aircraft being landed but not stopping propulsion.

81. The control method according to claim 79, wherein:
the second motion state includes the movable object being in a locked state, wherein the movable object in the locked state stops moving.

82. The control method according to claim 81, wherein:
the movable object includes an aircraft, and the locked state includes the aircraft being in a hovering state.

83. The control method according to claim 79, wherein:
the motion state of the movable object is able to be changed based on at least one of an operation instruction of an operator of the movable object or motion environment of the movable object.

84. The control method according to any one of claims 73 to 83, wherein:
the control mode of the motion-sensing control device is related to a user trigger instruction received by the motion-sensing control device.

85. The control method according to claim 84, wherein:
the user trigger instruction includes an instruction for selecting the control mode of the motion-sensing control device or an instruction for switching the state of the movable object.

86. The control method according to claim 85, wherein:
the selection instruction includes selecting the control mode for the display device or the control mode for the movable object.

87. The control method according to claim 95, wherein:
the switching instruction includes switching the communication state of the movable object or switching the motion state of the movable object.

88. The control method according to claim 86, further comprising:
in response to the selection of the control mode for the display device, when the current state of the movable object is the first state, switching the current state of the movable object to the second state.

89. The control method according to claim 88, wherein when the current state of the movable object is the first state, switching the current state of the movable object to the second state, includes:
when the movable object is in the first motion state, switching the movable object to be in the second motion state.

90. The control method according to claim 73, wherein:
the control object information is generated by the motion-sensing control device based on the current state of the movable object, or the control object information is generated by the movable object based on the current state of the movable object.

91. The control method according to claim 73, wherein:
configuring the display interface of the display device using the attitude information includes: using the attitude information to form a movable position point on the display interface, to control the display interface using the position point.

92. The control method according to claim 91, further comprising:
when detecting a calibration instruction for the position point, calibrating the position point to a preset position on the display interface.

93. The control method according to claim 91, further comprising:
when switching from the control mode for the movable object to the control mode for the display device, generating a dynamic position point on the display interface, and/or displaying the position point at a preset position on the display interface.

94. The control method according to claim 92 or claim 93, wherein the preset position is a center position of the display interface.

95. The control method according to claim 92, wherein the position point is displayed on the display interface with a preset symbol.

96. The control method according to claim 91, wherein controlling the display interface using the position point includes:
in response to a change in the attitude of the motion-sensing control device, controlling the position point to move to a region of interest in the display interface; and/or
in response to a change in the attitude of the motion-sensing control device, controlling a target object in the display interface to move with the movement of the position point.

97. The control method according to claim 96, further comprising:
when the position point is located at the region of interest of the display interface, responding to a user object control instruction, controlling an object in the region of interest to execute a corresponding object control instruction.

98. The control method according to claim 97, wherein controlling the object in the region of interest to execute the corresponding object control instruction includes at least one of:
controlling the object to execute a confirmation instruction, controlling the object to execute an exit instruction, controlling the object to execute a selection instruction, controlling the object to execute a play instruction, or controlling the object to execute a pause instruction.

99. The control method according to claim 72, wherein configuring the display interface of the display device using the attitude information includes:
controlling a scaling of the display interface of the display device, and/or controlling a scaling of an object within the display interface.

100. The control method according to claim 99, wherein:
the object within the display interface includes a virtual screen, and controlling the scaling of the object within the display interface includes: controlling the scaling of the virtual screen, and/or controlling the scaling of content displayed within the virtual screen.

101. The control method according to claim 1, wherein:
the attitude information is transmitted to the movable object via a third communication link by the motion-sensing control device; and
configuring the display interface of the display device based on the attitude information includes: receiving the attitude information forwarded by the movable object through a fourth communication link, and configuring the display interface based on the attitude information.

102. The control method according to claim 71, wherein:
the attitude information is received from the motion-sensing control device via a first communication link.

103. The control method according to claim 101 or claim 102, wherein the first communication link or the fourth communication link is a near-field communication link, and the third communication link is a far-field communication link.

104. The control method according to claim 73, wherein the display device is configured to display information associated with the movable object on the display interface.

105. The control method according to claim 104, wherein the information associated with the movable object includes at least one of the following: a velocity of the movable object, acceleration of the movable object, a position of the movable object, or an environmental image acquired by the movable object.

106. A control method applied to a display device, comprising:
receiving attitude information and control object information associated with the attitude information sent by a motion-sensing control device, wherein the motion-sensing control device is capable of generating attitude information in response to changes in its own attitude;
when a control object represented by the control object information is the display device, executing a response measure corresponding to the attitude information; and
when the control object represented by the control object information is a target object other than the display device, forwarding the attitude information and the control object information to the target object, to make the target object execute a response measure corresponding to the attitude information.

107. The control method according to claim 106, wherein when the control object represented by the control object information is the display device, executing the response measure corresponding to the attitude information includes: configuring the display interface of the display device based on the attitude information.

108. The control method according to claim 107, wherein the target object is a movable object, and the movable object is an object capable of moving in real space.

109. The control method according to claim 108, wherein making the target object execute the response measure corresponding to the attitude information includes: the target object changing its attitude in response to the attitude information.

110. The control method according to claim 109, wherein:
the motion-sensing control device provides a control mode for the display device and a control mode for the movable object;
the control mode of the motion-sensing control device is related to the current state of the movable object;
in response to the current state of the movable object being a first state, the attitude information sent by the motion-sensing control device is directed to the movable object; and
in response to the current state of the movable object being a second state, the attitude information sent by the motion-sensing control device is directed to the display interface.

111. The control method according to claim 110, further comprising:
receiving state information sent by the movable object, to determine the current state of the movable object based on the state information.

112. The control method according to claim 111, wherein:
the state information includes a communication state of the movable object and/or a motion state of the movable object.

113. The control method according to claim 113, wherein:
the movable object and the display device are communicatively connected to each other, and the communication state includes the movable object and the display device being in a communicatively connected state or the movable object and the display device being in a communicatively disconnected state.

114. The control method according to claim 113, wherein:
the first state includes the movable object and the display device being in the communicatively connected state; and
the second state includes the movable object and the display device being in the communicatively connected state or the movable object and the display device being in the communication disconnected state.

115. The control method according to claim 112, wherein:
the movable object includes multiple motion states, wherein the first state includes the movable object being in a first motion state and the second state includes the movable object being in a second motion state.

116. The control method according to claim 115, wherein:
the movable object includes an aircraft, and the first motion state includes at least one of the following: the aircraft being in the process of propulsion, the aircraft being in the process of takeoff, the aircraft being in flight, the aircraft being in the process of returning to base, the aircraft being in the process of landing, or the aircraft has landed but has not stopped propulsion.

117. The control method according to claim 115, wherein:
the second motion state includes the movable object being in a locked state, wherein the movable object in the locked state stops moving.

118. The control method according to claim 117, wherein:
the movable object includes an aircraft, and the locked state includes the aircraft being in a hovering state.

119. The control method according to claim 115, wherein:
the motion state of the movable object is able to be changed based on at least one of an operation instruction of an operator of the movable object or motion environment of the movable object.

120. The control method according to any one of claims 109 to 119, wherein:
the control mode of the motion-sensing control device is related to a user trigger instruction received by the motion-sensing control device.

121. The control method according to claim 120, wherein:
the user trigger instruction includes an instruction for selecting the control mode of the motion-sensing control device or an instruction for switching the state of the movable object.

122. The control method according to claim 121, wherein:
the selection instruction includes selecting the control mode for the display device or the control mode for the movable object.

123. The control method according to claim 121, wherein:
the switching instruction includes switching the communication state of the movable object or switching the motion state of the movable object.

124. The control method according to claim 122, further comprising:
in response to the selection of the control mode for the display device, when the current state of the movable object is the first state, switching the current state of the movable object to the second state.

125. The control method according to claim 124, wherein when the current state of the movable object is the first state, switching the current state of the movable object to the second state, includes:
when the movable object is in the first motion state, switching the movable object to be in the second motion state.

126. The control method according to claim 108, wherein:
the control object information is generated by the motion-sensing control device based on the current state of the movable object, or the control object information is generated by the movable object based on the current state of the movable object.

127. The control method according to claim 108, wherein:
configuring the display interface of the display device using the attitude information includes: using the attitude information to form a movable position point on the display interface, to control the display interface using the position point.

128. The control method according to claim 127, further comprising:
when detecting a calibration instruction for the position point, calibrating the position point to a preset position on the display interface.

129. The control method according to claim 127, further comprising:
when switching from the control mode for the movable object to the control mode for the display device, generating a dynamic position point on the display interface, and/or displaying the position point at a preset position on the display interface.

130. The control method according to claim 128 or claim 129, wherein the preset position is a center position of the display interface.

131. The control method according to claim 128, wherein the position point is displayed on the display interface with a preset symbol.

132. The control method according to claim 127, wherein configuring the display interface using the position point includes:
in response to a change in the attitude of the motion-sensing control device, controlling the position point to move to a region of interest in the display interface; and/or
in response to a change in the attitude of the motion-sensing control device, controlling a target object in the display interface to move with the movement of the position point.

133. The control method according to claim 132, further comprising:
when the position point is located at the region of interest of the display interface, responding to a user object control instruction, controlling an object in the region of interest to execute a corresponding object control instruction.

134. The control method according to claim 133, wherein controlling the object in the region of interest to execute the corresponding object control instruction includes at least one of:
controlling the object to execute a confirmation instruction, controlling the object to execute an exit instruction, controlling the object to execute a selection instruction, controlling the object to execute a play instruction, or controlling the object to execute a pause instruction.

135. The control method according to claim 107, wherein controlling the display interface of the display device based on the attitude information includes:
controlling a scaling of the display interface of the display device, and/or controlling a scaling of an object within the display interface.

136. The control method according to claim 136, wherein:
the object within the display interface includes a virtual screen, and controlling the scaling of the object within the display interface includes: controlling the scaling of the virtual screen, and/or controlling the scaling of content displayed within the virtual screen.

137. The control method according to claim 106, wherein making the target object to execute the response measure corresponding to the attitude information includes:
receiving the attitude information and the control object information through a first communication link, such that the attitude information and the control object information are forwarded to the target object through a second communication link, to make the target object perform the response measure corresponding to the attitude information.

138. The control method according to claim 106, wherein:
the attitude information and the control object information are received through a first communication link from the motion-sensing control device, and are forwarded to the movable object via a third communication link.

139. The control method according to claim 137 or claim 1138, wherein the first communication link is a near-field communication link, and the second communication link or the third communication link is a far-field communication link.

140. The control method according to claim 108, wherein the display device is configured to display information associated with the movable object on the display interface.

141. The control method according to claim 140, wherein the information associated with the movable object includes at least one of the following: a velocity of the movable object, acceleration of the movable object, a position of the movable object, or an environmental image acquired by the movable object.

142. A control method applied to a movable object, comprising:
receiving attitude information and control object information associated with the attitude information sent by a motion-sensing control device, wherein the motion-sensing control device is able to generate the attitude information in response to changes in its own attitude;
when a control object represented by the control object information is the movable object, executing a response measure corresponding to the attitude information; and
when the control object represented by the control object information is an object other than the movable object, not executing the response measure corresponding to the attitude information.

143. The control method according to claim 142, wherein the movable object is an object capable of moving in real space, and executing the response measures corresponding to the attitude information includes performing an attitude change in response to the attitude information.

144. The control method according to claim 143, wherein the object other than the movable object is a display device.

145. The control method according to claim 144, wherein:
the motion-sensing control device provides a control mode for the display device and a control mode for the movable object;
the control mode of the motion-sensing control device is related to a current state of the movable object;
in response to the current state of the movable object being a first state, the control object to which the attitude information sent by the motion-sensing control device is directed is the movable object; and
in response to the current state of the movable object being a second state, the control object to which the attitude information sent by the motion-sensing control device is directed is the display interface.

146. The control method according to claim 145, further comprising:
sending state information of the movable object to the motion-sensing control device, such that the motion-sensing control device determine the current state of the movable object based on the state information.

147. The control method according to claim 146, wherein:
the state information includes a communication state of the movable object and/or a motion state of the movable object.

148. The control method according to claim 147, wherein:
the movable object and the display device are communicatively connected to each other, and the communication state includes the movable object and the display device being in a communicatively connected state or the movable object and the display device being in a communicatively disconnected state.

149. The control method according to claim 148, wherein:
the first state includes the movable object and the display device being in the communicatively connected state; and
the second state includes the movable object and the display device being in the communicatively connected state or the movable object and the display device being in the communication disconnected state.

150. The control method according to claim 147, wherein:
the movable object includes multiple motion states, wherein the first state includes the movable object being in a first motion state and the second state includes the movable object being in a second motion state.

151. The control method according to claim 150, wherein:
the movable object includes an aircraft, and the first motion state includes at least one of the following: the aircraft being in the process of propulsion, the aircraft being in the process of takeoff, the aircraft being in flight, the aircraft being in the process of returning to base, the aircraft being in the process of landing, or the aircraft being landed but not stopping propulsion.

152. The control method according to claim 150, wherein:
the second motion state includes the movable object being in a locked state, wherein the movable object in the locked state stops moving.

153. The control method according to claim 152, wherein:
the movable object includes an aircraft, and the locked state includes the aircraft being in a hovering state.

154. The control method according to claim 150, wherein:
the motion state of the movable object is able to be changed based on at least one of an operation instruction of an operator of the movable object or motion environment of the movable object.

155. The control method according to any one of claims 145 to 154, wherein:
the control mode of the motion-sensing control device is related to a user trigger instruction received by the motion-sensing control device.

156. The control method according to claim 155, wherein:
the user trigger instruction includes an instruction for selecting the control mode of the motion-sensing control device or an instruction for switching the state of the movable object.

157. The control method according to claim 156, wherein:
the selection instruction includes selecting the control mode for the display device or the control mode for the movable object.

158. The control method according to claim 156, wherein:
the switching instruction includes switching the communication state of the movable object or switching the motion state of the movable object.

159. The control method according to claim 157, further comprising:
in response to the selection of the control mode for the display device, when the current state of the movable object is the first state, switching the current state of the movable object to the second state.

160. The control method according to claim 159, wherein when the current state of the movable object is the first state, switching the current state of the movable object to the second state, includes:
when the movable object is in the first motion state, switching the movable object to be in the second motion state.

161. The control method according to claim 144, wherein:
the control object information is generated by the motion-sensing control device based on the current state of the movable object, or the control object information is generated by the display device based on the current state of the movable object.

162. The control method according to claim 144, wherein the attitude information and the controlled object information are obtained through forwarding by the display device via a second communication link, after being sent to the display device via a first communication link.

163. The control method according to claim 144, wherein the attitude information and the controlled object information are received from the motion-sensing control device using a third communication link.

164. The method according to claim 162 or claim 163, wherein the first communication link is a near-field communication link, and the second communication link or third communication link is a far-field communication link.

165. A control method, applicable to a scenarios where a motion-sensing control device capable of generating attitude information in response to changes in its own attitude controls a display device and a movable object, the method comprising:
in response to a current state of the movable object being a first state, determining a control object to which the attitude information generated by the motion-sensing control device targets to be the movable object; and
in response to the current state of the movable object being a second state, determining the control object to which the attitude information generated by the motion-sensing control device targets to be a display interface.

166. The control method according to claim 165, wherein the movable object is an object capable of moving in real space.

167. The control method according to claim 166, further comprising
receiving state information sent by the movable object, to determine the current state of the movable object based on the state information.

168. The control method according to claim 167, wherein the state information includes a communication state of the movable object and/or a motion state of the movable object.

169. The control method according to claim 168, wherein:
the movable object and the display device are communicatively connected to each other, and the communication state includes the movable object and the display device being in a communicatively connected state or the movable object and the display device being in a communicatively disconnected state.

170. The control method according to claim 169, wherein:
the first state includes the movable object and the display device being in the communicatively connected state; and
the second state includes the movable object and the display device being in the communicatively connected state or the movable object and the display device being in the communication disconnected state.

171. The control method according to claim 168, wherein:
the movable object includes multiple motion states, wherein the first state includes the movable object being in a first motion state and the second state includes the movable object being in a second motion state.

172. The control method according to claim 171, wherein:
the movable object includes an aircraft, and the first motion state includes at least one of the following: the aircraft being in the process of propulsion, the aircraft being in the process of takeoff, the aircraft being in flight, the aircraft being in the process of returning to base, the aircraft being in the process of landing, or the aircraft being landed but not stopping propulsion.

173. The control method according to claim 171, wherein:
the second motion state includes the movable object being in a locked state, wherein the movable object in the locked state stops moving.

174. The control method according to claim 173, wherein:
the movable object includes an aircraft, and the locked state includes the aircraft being in a hovering state.

175. The control method according to claim 171, wherein:
the motion state of the movable object is able to be changed based on at least one of an operation instruction of an operator of the movable object or motion environment of the movable object.

176. The control method according to any one of claims 165 to 175, wherein:
the control mode of the motion-sensing control device is related to a user trigger instruction received by the motion-sensing control device.

177. The control method according to claim 176, wherein:
the user trigger instruction includes an instruction for selecting the control mode of the motion-sensing control device or an instruction for switching the state of the movable object.

178. The control method according to claim 177, wherein:
the selection instruction includes selecting the control mode for the display device or the control mode for the movable object.

179. The control method according to claim 177, wherein:
the switching instruction includes switching the communication state of the movable object or switching the motion state of the movable object.

180. The control method according to claim 178, further comprising:
in response to the selection of the control mode for the display device, when the current state of the movable object is the first state, switching the current state of the movable object to the second state.

181. The control method according to claim 180, wherein when the current state of the movable object is the first state, switching the current state of the movable object to the second state, includes:
when the movable object is in the first motion state, switching the movable object to be in the second motion state.

182. The control method according to claim 165, wherein:
the attitude information generated by the motion-sensing control device is associated with the control object information;
the control object information is used to enable the display device and the movable object to determine the control object to which the received attitude information is directed; and
the control object is one of the display device and the movable object.

183. The control method according to claim 182, wherein:
the control object information is generated by the motion-sensing control device based on the current state of the movable object; or
the control object information is generated by the movable object based on the current state of the movable object; or
the control object information is generated by the display device based on the current state of the movable object.

184. A motion-sensing control device, comprising:
a processor;
a memory for storing processor-executable instructions,
wherein, the processor is configured to implement the method of any one of claims 1 to 35.

185. The motion-sensing control device of claim 184, wherein the motion-sensing control device includes a remote controller, the remote controller being capable of controlling the movable object.

186. A display device, comprising:
a processor;
a memory for storing processor-executable instructions,
wherein, the processor is configured to implement the method of any one of claims 36 to 141.

187. The display device of claim 186, wherein the display device includes head-mounted glasses.

188. A movable object, comprising:
a processor;
a memory for storing processor-executable instructions,
wherein, the processor is configured to implement the method of any one of claims 142 to 183.

189. The movable object of claim 188, wherein the movable object includes an unmanned aerial vehicle, an unmanned vehicle, or an unmanned boat.

190. A control system, comprising the motion-sensing control device according to claim 184, the display device according to claim 186, and the movable object according to claim 188, wherein the motion-sensing control device is capable of generating attitude information in response to changes in its own attitude, the movable object is an object capable of moving in real space, and information associated with the movable object is configured to be displayed on the display interface of the display device.

191. A computer-readable storage medium storing a computer program thereon, wherein, when the computer program is executed by a processor, steps of the method of any one of claims 1 to 183 are implemented.
